# EUROPÄISCHE PATENTSCHRIFT

(11) **EP 4 128 443 B1**
(45) Veröffentlichungstag und Bekanntmachung des Hinweises auf die Patenterteilung: **30.04.2025**
(21) Anmeldenummer: 21719041.2
(22) Anmeldetag: 25.03.2021
(51) Int. Cl.: H01R 13/53, H01R 25/00, H01R 31/02, H02G 15/16

(54) **HOCHLEISTUNGSSTECKVERBINDERSYSTEM**
HIGH-POWER PLUG CONNECTION SYSTEM
SYSTÈME DE CONNEXION À FICHE À HAUTE PUISSANCE

(30) Priorität: 27.03.2020 DE 102020108457
(43) Veröffentlichungstag der Anmeldung: 08.02.2023
(73) Patentinhaber: HARTING Electric Stiftung & Co. KG, 32339 Espelkamp (DE)
(72) Erfinder: FERDERER, Albert, 32339 Espelkamp (DE)
(74) Vertreter: Eisenführ Speiser
(86) Internationale Anmeldenummer: PCT/DE2021/100296
(87) Internationale Veröffentlichungsnummer: WO 2021/190707

(56) Entgegenhaltungen:
- US-A- 3 845 458
- US-A1- 2012 018 217
- US-A1- 2012 021 650

## Beschreibung

Die Erfindung geht aus von einem Hochleistungssteckverbindersystem nach der Gattung des unabhängigen Anspruchs 1.

Derartige Hochleistungssteckverbindersysteme werden benötigt, um hohe elektrische Spannungen und hohe elektrische Ströme zu übertragen und/oder zu verteilen. Besonders liegt dabei das Augenmerk auf der Anwendbarkeit in Unterflurbereichen schienengebundener Fahrzeuge, insbesondere der Verbindung von Triebwagen und Triebwaggons untereinander.

### Stand der Technik

Im Stand der Technik sind Lösungen bekannt, welche die Übertragung und/oder Verteilung hoher elektrische Ströme und/ oder Spannung zwischen Fahrzeugen untereinander oder zwischen Fahrzeugen mit angehängten Modulen ermöglichen. Diese Lösungen sehen jedoch zumeist eine unvorteilhafte und zum Teil unlösbare Fixierung der entsprechenden Kontaktelemente vor.

Besonders nachteilig an dem Stand der Technik ist die fehlende Wartungsfreundlichkeit und in der Regel auch ein erhöhter Platzbedarf. Grade bei stark beanspruchten Kontaktelementen, wie beispielsweise im Bereich des schienengebundenen Verkehrs wird es aufgrund immer höherer Anforderungen jedoch vermehrt zu Reparatur und Wartungsbedarf, beispielsweise durch erhöhte Elektroerosion aufgrund der hohen Stromstärken von über 500A.

Das Deutsche Patent- und Markenamt hat in der Prioritätsanmeldung zu vorliegender Anmeldung den folgenden Stand der Technik recherchiert: DE 41 35 391 C1.

Die US 2012/021650 A1 offenbart eine elektrische Verbinderanordnung, beispielsweise für Lasttrennschalter, aufweisend ein Gehäuse mit einem Sichtbereich zur Prüfung von Kontaktpositionen.

Die US 3 845 458 A offenbart eine Stromschienenverbindungsanordnung, wobei die Verbindung der Stromschienen innerhalb eines abgedichteten Gehäuses stattfindet und wobei das innere des Verbindergehäuses mit einer Isolierflüssigkeit gefüllt ist.

Die US 2012/018217 A1 offenbart eine Durchführungsanordnung für elektrische Steckverbinder, beispielsweise für Lasttrennschalter, wobei die der elektrische Steckverbinder mit einer Schraube in der Durchführungsanordnung fixiert werden kann, um die elektrische Verbindung zu sichern.

### Aufgabenstellung

Die Aufgabe der Erfindung besteht darin, ein platzsparendes, sicheres und kostengünstiges Kabelanschlussgehäuse, insbesondere geeignet für die Verwendung unterflur schienengebundener Fahrzeuge, für die Übertragung und/ oder Verteilung von hohen elektrischen Strömen anzubieten.

Die Aufgabe wird durch den Gegenstand der unabhängigen Ansprüche gelöst.

Vorteilhafte Ausgestaltungen der Erfindung sind in den Unteransprüchen und der folgenden Beschreibung angegeben.

Die Erfindung geht aus von einem Hochleistungssteckverbindersystem, aufweisend ein Kabelanschlussgehäuse zum Anschluss von zumindest zwei elektrischen Hochleistungssteckverbindern zur Übertragung und/ oder Verteilung hoher Stromstärken. Dabei sind die Hochleistungssteckverbinder insbesondere für Stromstärken größergleich 80 Ampere, bevorzugt Stromstärken über 500 Ampere, speziell Stromstärken im Bereich 1000 Ampere ausgelegt. Damit wird insbesondere sichergestellt, dass eine Verwendung im Bereich schienengebundener Fahrzeuge, insbesondere im Bereich unterflur von Waggons, Triebwagen und Triebwaggons möglich ist. Weiterhin nimmt das Kabelanschlussgehäuse zumindest zwei Isolierkörper auf. Die Isolierkörper sind zur Aufnahme jeweils eines Hochleistungskontaktes ausgelegt. Vorteilhafterweise verfügen die Isolierkörper über Befestigungsmittel, beispielsweise Gewinde, Fortsätze für Bajonettverschlüsse, Federn, Nuten oder ähnliche Mittel zur Fixierung des Isolierkörpers im Kabelanschlussgehäuse. Weiterhin sind die Isolierkörper zumindest im Inneren des Kabelanschlussgehäuses mit einer Profilierung oder einer Riffelung versehen, beispielsweise mit einem Wellenprofil oder radial umlaufenden Federn und/ oder Nuten. Dadurch werden die Luftstrecken und Kriechstrecken im Inneren des Kabelanschlussgehäuses vorteilhaft vergrößert. Die Längsachsen der Hochleistungskontakte sind grundsätzlich in einer Ebene angeordnet und versetzt voneinander angeordnet. Weiterhin sind die Hochleistungskontakte mittels einer elektrisch leitfähigen Schiene miteinander elektrisch leitend verbunden, wobei zur Verminderung des räumlichen Platzbedarfs die zumindest zwei Hochleistungskontakte mit einer Ausnehmung versehen sind, in welche sich die elektrisch leitende Schiene zumindest teilweise fügt. Damit kann auch eine Schiene gemeint sein, welche mit Öffnungen versehen ist, in welche die zumindest zwei Hochleistungskontakte mit der je wenigstens einen Ausnehmung eingesetzt werden. Dabei kann beispielsweise eine Verbindung bekannter Welle-Nabe Verbindungen angestrebt werden. Besonders bevorzugt wird eine Ausführungsform des Kabelanschlussgehäuses, welches mehr als zwei Hochleistungskontakte aufnimmt, insbesondere nimmt ein Kabelanschlussgehäuse drei Hochleistungskontakte auf. Der Hochleistungskontakt ist bevorzugt wenigstens teilweise als zylindrisches Profil ausgeführt. Besonders bevorzugt ist zumindest ein zu verbindender Bereich des Hochleistungskontaktes als zylindrisches Vollprofil ausgeformt. Die Verwendung anderer geometrischer Profile sind dem Fachmann bekannt und können vorteilhaft eingesetzt werden. Der zylindrische Hochleistungskontakt weist bevorzugt in einem Bereich der Umfangsfläche einen grundsätzlich planen Bereich auf, welcher zur Verbindung mit der elektrisch leitenden Schiene vorgesehen ist. Dieser plane Bereich kann beispielsweise spanend abgetragen sein, insbesondere durch Fräsen. Weiterhin könnte auf zerspanende Weise auch eine Nut in den Hochleistungskontakt eingearbeitet werden. Die Nut sollte dabei idealerweise eine Tiefe erreichen die ausreichend ist, die elektrisch leitende Schiene wenigstens teilweise aufzunehmen. Durch die Verbindung der Schiene mit den Hochleistungskontakten, sei es durch plane Auflagefläche oder eingearbeitete Nut, kann zunächst räumlich Platz eingespart werden. Darüber hinaus wird verhindert, dass sich die Hochleistungskontakte innerhalb der die Hochleistungskontakt aufnehmenden Isolierkörper um ihre Längsachse verdrehen. Grundsätzlich sind auch umformende Fertigungsverfahren zur Herstellung einer etwa planen Fläche am Hochleistungskontakt denkbar. Die Ausnehmungen der zumindest zwei Hochleistungskontakte liegen in etwa in einer Ebene, sodass die Schiene auf den Ausnehmungen aufliegend befestigt ist. Somit wird sowohl die Rotation der Hochleistungskontakte als auch ein axiales Verschieben in Richtung der Längsachse der Hochleistungskontakte verhindert. Das Kabelanschlussgehäuse und die daran befestigten Isolierkörper nehmen dabei grundsätzlich die in Längsrichtung der Hochleistungskontakte wirkenden Kräfte auf. Durch die Schiene werden die Hochleistungskontakte weiterhin sowohl in Längsrichtung gesichert, als auch gegen verdrehen um die Längsachse gesichert. Die Hochleistungskontakte ragen von einer Gehäusewand des Hochleistungssteckverbinders in einen Innenraum des Kabelanschlussgehäuses, wobei die Hochleistungskontakte im Innenraum freistehend positioniert sind und von der Schiene arretiert sind. Die Isolierkörper sind dazu derart ausgeführt, dass Sie mit dem Kabelanschlussgehäuse grundsätzlich lösbar verbunden sind. Idealerweise werden die Isolierkörper mit Schraubverbindungen an das Kabelanschlussgehäuse montiert. Geschickter Weise werden die Isolierkörper durch eine Durchgangsöffnung geführt und an dieser im Kabelanschlussgehäuse fixiert. Ein Hochleistungssteckverbinder ist dabei derart ausgeführt, dass dieser lösbar mit dem Kabelanschlussgehäuse fixiert werden kann. Dabei ist der Hochleistungssteckverbinder idealerweise mit einem eigenen Gehäuse ausgestattet, welches sich formschlüssig in das Kabelanschlussgehäuse fügen lässt, und mit Sicherungselementen, beispielsweise Schrauben, lösbar an dem Kabelanschlussgehäuse befestigen lässt. Durch diese Ausgestaltung können alle im Kabelanschlussgehäuse auftretenden Kräfte durch den Hochleistungssteckverbinder sowie das Kabelanschlussgehäuse selbst aufgenommen und abgefangen werden, sodass die Schiene mit den Hochleistungskontakten problemlos innerhalb des Kabelanschlussgehäuses ohne weitere Halteelemente auskommt. Besonders vorteilhaft sind hierbei Isolierkörper mit einer zuvor erwähnten Profilierung ausgeführt, beispielsweise mit grundsätzlich wellenförmigen Ausformungen, quer zur Längsachse. Die freistehenden Isolierkörper mitsamt der erwähnten Profilierung wirken sich hervorragend auf die einzuhaltenden Luftstrecken und Kriechstrecken aus.

In einer bevorzugten Ausführungsform ist die Schiene formschlüssig mit den Hochleistungskontakten verbunden. Eine Schiene kann beispielsweise über mehrere gleichartige erste Öffnungen verfügen, in welche die Hochleistungskontakte eingeschoben werden. Diese Öffnungen werden gemäß der Erfindung grundsätzlich als zylindrische Öffnungen ausgeführt, allerdings mit angeformten Fortsätzen, welche mit den Ausnehmungen der korrelierenden Hochleistungskontakte in Eingriff gebracht werden. Um die Schiene mit den Hochleistungskontakten zu verbinden kann nun beispielsweise ein Sicherungsstift, ein Splint oder ein vergleichbares Sicherungselement durch die jeweiligen Hochleistungskontakte gesteckt werden. Ebenfalls kann eine zweite Öffnung in der Schiene vorgesehen sein, welche grundsätzlich etwa orthogonal zu einer ersten Öffnung verläuft und mit einer korrespondierenden Öffnung in den jeweiligen Hochleistungskontakten in Übereinstimmung gebracht werden können. Durch diese zweite Öffnung kann ein Sicherungselement eingebracht werden, um eine formschlüssige Sicherung zu erreichen. Dabei ist die zweite Öffnung in der Schiene sowohl als Durchgangsöffnung wie auch als Sackloch ausführbar.

In einer besonders bevorzugten Ausführungsform ist die Schiene kraftschlüssig mit den Hochleistungskontakten verbunden. Dazu liegt die Schiene beispielsweise auf den Ausnehmungen der Hochleistungskontakte auf. Als Sicherungselement können verschiedene kraftschlüssige Sicherungselemente eingesetzt werden, beispielsweise Keile, Schrauben, Madenschrauben, Gewindebolzen oder Nieten. In einer Ausführungsform weist die Schiene je Hochleistungskontakt zumindest eine Durchgangsöffnung auf, durch welche zumindest ein Sicherungselement mit Außengewinde geführt ist, wobei das Sicherungselement mit einem Innengewinde im Hochleistungskontakt verbunden ist. Bevorzugt werden Schrauben durch die Durchgangsöffnungen in der Schiene eingeführt und in eine Gewindeöffnung in einem korrespondierenden Hochleistungskontakt eingeschraubt. Bei der Gewindeöffnung kann es sich um ein Sackloch handeln. Ebenso kann es sich um eine Durchgangsöffnung mit Gewinde handeln.

In einer sinnvollen Ausführungsform sind die zumindest zwei Hochleistungskontakte sich gegenüberliegend im Kabelanschlussgehäuse angeordnet. Da die Hochleistungskontakte im Kabelanschlussgehäuse verbunden werden, können die Hochleistungskontakte sich kontaktieren. Die erfindungsgemäße Schiene sorgt für die sichere Kontaktierung der zumindest zwei Hochleistungskontakte. Besonders bevorzugt wird eine Ausführungsform mit zumindest drei Hochleistungskontakten, welche sich im Kabelanschlussgehäuse durch die Schiene elektrisch leitend verbinden lassen. Dabei liegen sich zumindest ein Hochleistungskontakt und die zumindest zwei verbleibenden Hochleistungskontakte gegenüber. Die Schiene wird dabei parallel zu einer durch die Längsachsen der Hochleistungskontakte gebildete Ebene mit den Hochleistungskontakten verbunden. In einer Ausführungsform liegen die Längsachsen der Hochleistungskontakte grundsätzlich parallel zueinander. Die Schiene wird in dieser Ausführungsform parallel zu der durch die Längsachsen der Hochleistungskontakte gebildete Ebene und zumindest grundsätzlich orthogonal zu den Längsachsen der Hochleistungskontakte ausgerichtet.

In einer vorteilhaften Ausführungsform weist die Schiene eine vertikale Mittelebene auf, welche von jedem der zumindest zwei Hochleistungskontakte zumindest teilweise durchstoßen wird. Durch diese Ausführungsform wird sichergestellt, dass die Schiene genug Auflagefläche, bzw. Kontaktfläche mit den Hochleistungskontakten aufbringen kann. Ein weiterer Vorteil besteht darin, dass beispielsweise bei dem Einsatz von zumindest drei Hochleistungskontakten die Längsachsen der gegenüberliegenden Hochleistungskontakte versetzt zueinander, parallel in einer gemeinsamen horizontalen Ebene positioniert werden. Dadurch wird eine besonders platzsparende Bauform erreicht, da die Hochleistungskontakte nicht vor ein Halteelement oder eine Schiene stoßen, sondern an der Schiene vorbei oder durch die Schiene geführt werden. Da es grundsätzlich darum geht, Spannungen und Ströme zu übertragen, können auch hier die Hochleistungskontakte dicht nebeneinander positioniert werden.

Eine logische Ausführungsform sieht demnach vor, die Schiene zumindest größtenteils bündig mit den Stirnflächen der zumindest zwei Hochleistungskontakte zu verbinden. Damit ist gemäß zuvor genannter Ausführungsform gemeint, dass die Hochleistungskontakte über die Mittelebene der Schiene hinaus bis an die entsprechende Kante der Schiene geführt sind. Dadurch wird eine sichere Kontaktierung der Schiene zu den zumindest zwei Hochleistungskontakten bewirkt.

Eine besonders wartungsfreundliche Ausführungsform sieht entsprechend vor, die Sicherungselemente orthogonal zu der Mittelebene der Schiene auszurichten. Das Kabelanschlussgehäuse des Hochleistungssteckverbinders wird mit einem Gehäusedeckel zur idealerweise luftdichten und wasserdichten Abschottung des Innenraums des Kabelanschlussgehäuses versehen. Wird der Gehäusedeckel entfernt, können zu Reparaturzwecken oder zu Wartungszwecken die vom Gehäusedeckel in Richtung Boden des Kabelanschlussgehäuses gerichteten Sicherungselemente, bei denen es sich idealerweise um Schrauben handelt, einfach von Wartungspersonal erreicht werden. Dabei sei erwähnt, dass der Gehäusedeckel des Kabelanschlussgehäuses sinnvollerweise in Richtung Erdboden gerichtet ist, während der Boden des Kabelanschlussgehäuses außen unterflur an einem Fahrzeug, beispielsweise einem Triebwagen, oder einem durch ein Fahrzeug bewegbares, angehängtes Transportelement, beispielsweise einem Waggon, angebracht wird. Somit kann das Wartungspersonal oder das Reparaturpersonal in einfacher Weise Zugang zu dem Innenraum des Kabelanschlussgehäuses, insbesondere zu den Hochleistungskontakten und/ oder der Schiene erhalten.

### Ausführungsbeispiel

Ein Ausführungsbeispiel der Erfindung ist in den Zeichnungen dargestellt und wird im Folgenden näher erläutert. Es zeigen:
- Fig. 1: ein Teilschnitt einer perspektivischen Darstellung eines erfindungsgemäßen Hochleistungssteckverbindersystems;
- Fig. 2: ein horizontaler Schnitt entlang einer Längsachse des erfindungsgemäßen Hochleistungssteckverbindersystems;
- Fig. 3: ein vertikaler Schnitt entlang einer Längsachse des erfindungsgemäßen Hochleistungssteckverbindersystems;
- Fig. 4: ein Querschnitt entlang einer Schiene des erfindungsgemäßen Hochleistungssteckverbindersystems.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

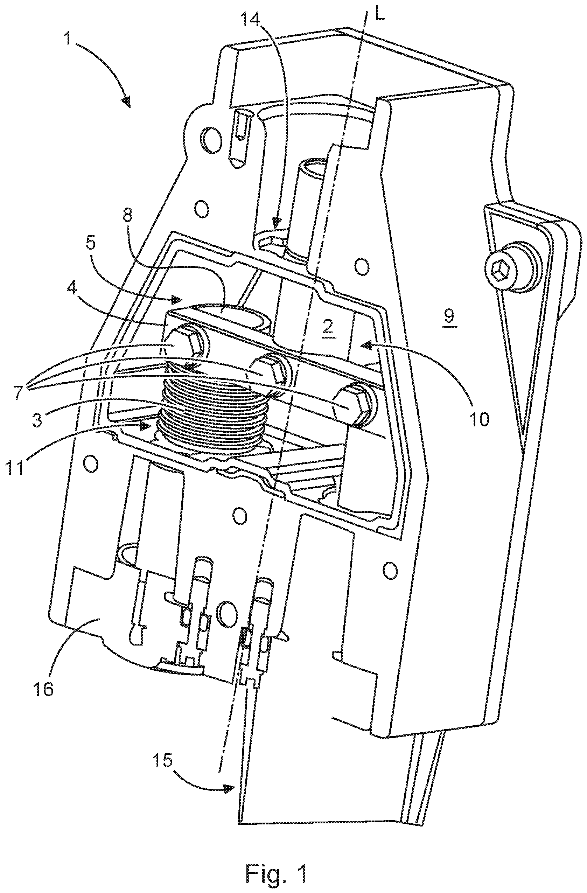

Die Figur 1 zeigt eine perspektivische Darstellung eines erfindungsgemäßen Hochleistungssteckverbindersystems mit horizontalen Schnitt entlang einer Parallelen zur Längsachse eines Kabelanschlussgehäuse 1. Die dargestellte Ausführungsform weist drei Hochleistungskontakte 2 auf. Dabei ist ein Hochleistungskontakt 2 zwei baugleichen Hochleistungskontakten 2 gegenüberliegend positioniert. Zwei Hochleistungskontakte 2 sind ohne einen Isolierkörper 3 dargestellt. Der Isolierkörper 3 nimmt den entsprechenden Hochleistungskontakt 2 in sich auf. Die Hochleistungskontakte 2 sind mittels einer elektrisch leitenden Schiene 4 miteinander verbunden. Dazu weisen die Hochleistungskontakte 2, sowie die dazugehörige(n) Isolierkörper 3 Ausnehmungen 5 auf. Die Schiene 4 weist entsprechende Durchgangsöffnungen 6 auf. Durch diese Durchgangsöffnungen 6 werden die dargestellten Sicherungselemente 7 geführt und mit den korrespondierenden Hochleistungskontakten 2 verbunden. In der dargestellten Ausführung handelt es sich bei den Sicherungselementen 7 um Schrauben mit Sechskant Schraubenkopf. Zur Verschraubung von Schiene 4 und Hochleistungskontakt 2, weisen die Hochleistungskontakte 2 Durchgangsöffnungen 6 auf, welche mit einem dargestellten Ausführung handelt es sich bei den Sicherungselementen 7 um Schrauben mit Sechskant Schraubenkopf. Zur Verschraubung von Schiene 4 und Hochleistungskontakt 2, weisen die Hochleistungskontakte 2 Durchgangsöffnungen 6 auf, welche mit einem Innengewinde versehen sind. Anstelle eines Gewindes in den Durchgangsöffnungen 6 können auf der der Schiene 4 gegenüberliegenden Seite eine Mutter oder vergleichbare Gewindeaufnahme nachfolgen. Alternativ werden die Hochleistungskontakte 2 mit je einem Sackloch ausgeführt, welches mit einem Innengewinde versehen ist. Andere Verbindungsmöglichkeiten, insbesondere Welle-Nabe Verbindungen, sind dem Fachmann bekannt und können alternativ zu den dargestellten Sicherungselementen 7 zu einem Einsatz kommen. Zur Herstellung einer sicheren und zumindest ausreichenden elektrischen Verbindung werden die Hochleistungskontakte 2 mit deren Stirnseiten 8 zumindest teilweise bündig mit der Kante der Schiene 4 in Flucht gebracht, welche dem Gehäusedurchbruch 14 des entsprechenden Hochleistungskontakts 2 gegenüberliegt. Das Kabelanschlussgehäuse 1 weist eine Gehäusewand 9 auf. Diese umlaufende Gehäusewand 9 bildet einen Innenraum 10.

Der dargestellte Isolierkörper 3 weist an der von einer Schiene 4 zu einer Gehäusewand 9 des Kabelanschlussgehäuses 1 eine Profilierung 11 auf, welche beispielhaft dargestellt ist. Die Profilierung 11 erhöht in einfacher und vorteilhafter Weise die Luftstrecken und Kriechstrecken vom Anschlussbereich der Schiene 4 und dem darin dargestellten Hochleistungskontakt 2. Weiterhin ist erkennbar, dass sowohl der Isolierkörper 3, als auch der darin befindliche Hochleistungskontakt 2 über je eine Ausnehmung 5 verfügen. Diese Ausnehmung 5 kann beispielsweise mittels spanendem Herstellungsverfahren ausgeformt werden. Besonders trickreich sind die Isolierkörper 3 gestaltet. Diese sind, neben der Profilierung 11 mit Befestigungselementen 12 versehen. Die Befestigungselemente 12 sind als grundsätzlich plane, teilkreisförmige Fortsätze an dem Isolierkörper 3 angeformt. Die zu den Isolierkörpern 3 gehörenden Gehäusedurchbrüche 14 in der Gehäusewand 9 des Kabelanschlussgehäuses 1 weisen Ausnehmungen auf, welche zumindest den Ausmaßen der Befestigungselemente 12 der Isolierkörper 3 entsprechen. Dabei sind die Befestigungselemente 12 und die Ausnehmungen in den Gehäusedurchbrüchen 14 derart positioniert, dass die Befestigungselemente 12 eine Sicherung gegen axiales Verschieben in Richtung der Längsachse L des jeweiligen Hochleistungskontakts 2 herstellen, sobald der Hochleistungskontakt 2 mit dem dazugehörigen Isolierkörper 3 und mit der Schiene 4 durch das Sicherungselement 7 lösbar fixiert ist. Anders formuliert, lässt sich das Befestigungselement 12 des Isolierkörpers 3 vergleichbar mit einem Bajonettverschluss mit der Gehäusewand 9 verbinden.

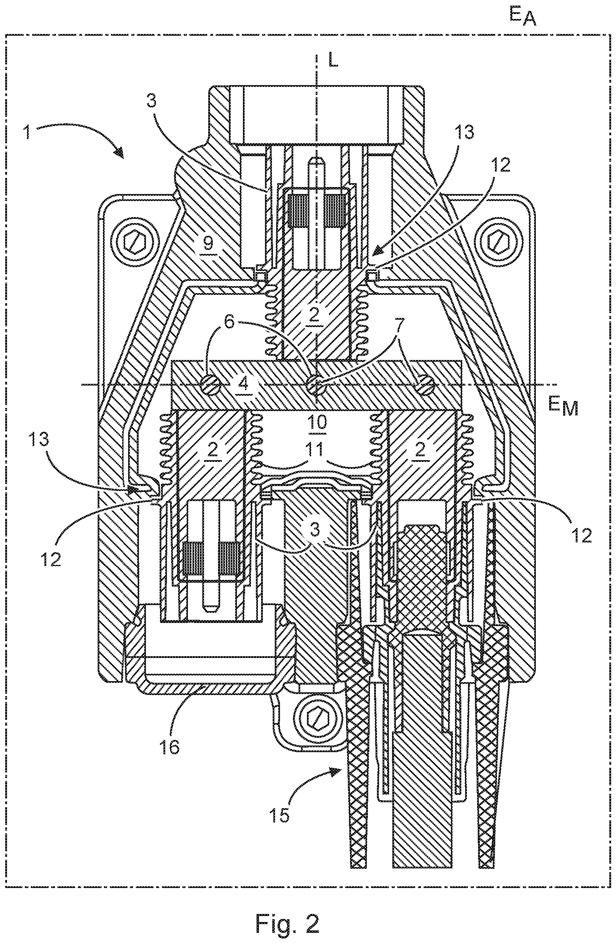

In der Figur 2 wird die erfindungsgemäße Ausführungsform eines Hochleistungssteckverbindersystems mit Kabelanschlussgehäuse 1 in einer Schnittdarstellung vergleichbar der Schnittdarstellung der Figur 1, jedoch in einer direkten Draufsicht gezeigt. Die Figur 1 und die Figur 2 zeigen, dass die Gehäusewand 9 Durchgangsöffnungen zum Anschluss von Hochleistungssteckverbindern 15 an korrespondierende Hochleistungskontakte 2 aufweist. Sofern jedoch ein Kabelanschlussgehäuse 1 nur zwei Hochleistungskontakte 2 aufnimmt, kann eine Verschlusskappe 16 in die besagten Durchgangsöffnungen des Kabelanschlussgehäuses 1 eingesetzt werden, um sowohl den Isolierkörper 3 des entsprechenden Hochleistungskontakts 2 zu sichern, als auch das Kabelanschlussgehäuse 1 gegen das Eindringen von beispielsweise Wasser, Öl, Staub oder ähnlichen unerwünschten Fremdsubstanzen zu schützen.

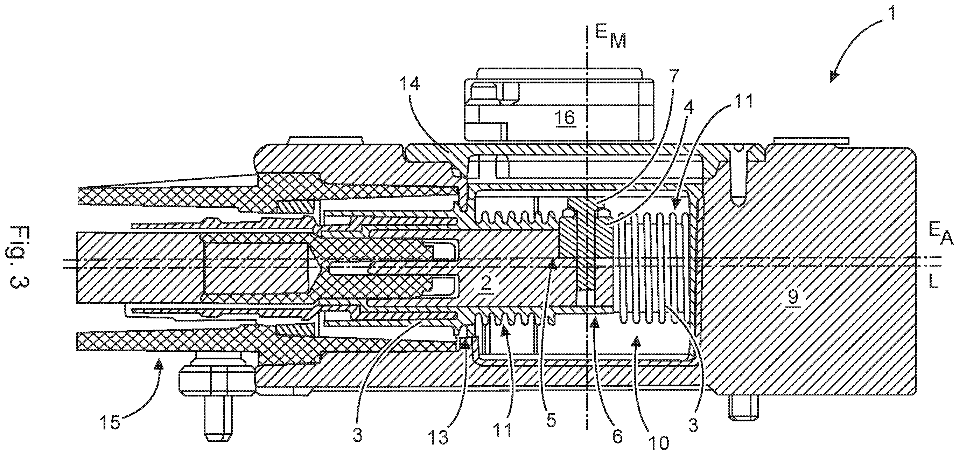

Die Figur 3 zeigt die erfindungsgemäße Ausführungsform des Hochleistungssteckverbindersystems mit dem Kabelanschlussgehäuse 1 in einem vertikalen Schnitt entlang der Längsachse L eines Hochleistungskontaktes 2. Besonders deutlich in dieser Darstellung wird die geringe räumliche Dimensionierung des Innenraums 10. Darüber hinaus wird der Zugang zur Montage und Wartung des Kabelanschlussgehäuses 1 durch einen Gehäusedeckel 14 deutlich. Der Gehäusedeckel 14 ist dabei derart ausgeformt, dass eine Verschlusskappe 16 mit dem Gehäusedeckel 14 verbunden werden kann, sofern die Verschlusskappe 16 nicht benötigt wird. Ebenfalls gut erkenntlich wird in dieser Schnittdarstellung die Verbindung der Schiene 4 mit den Hochleistungskontakten 2. Die Hochleistungskontakte 2 weisen eine Ausnehmung 5 auf. Die Ausnehmungen 5 der Hochleistungskontakte 2 liegen dazu in einer horizontalen Ebene E_{A}. Die Schiene 4 lässt sich auf die Ausnehmungen 5 derart aufbringen, dass die Schiene 4 mit den jeweiligen Hochleistungskontakten 2 an deren Stirnseite 8 bündig abschließt. Dadurch bedingt ragen die Hochleistungskontakte 2 über die Mittelebene E_{M} der Schiene 4 hervor. Durch diese Ausführungsform wird eine, im Vergleich zu dem Stand der Technik, geringe Baugröße des Kabelanschlussgehäuses 1 erreicht.

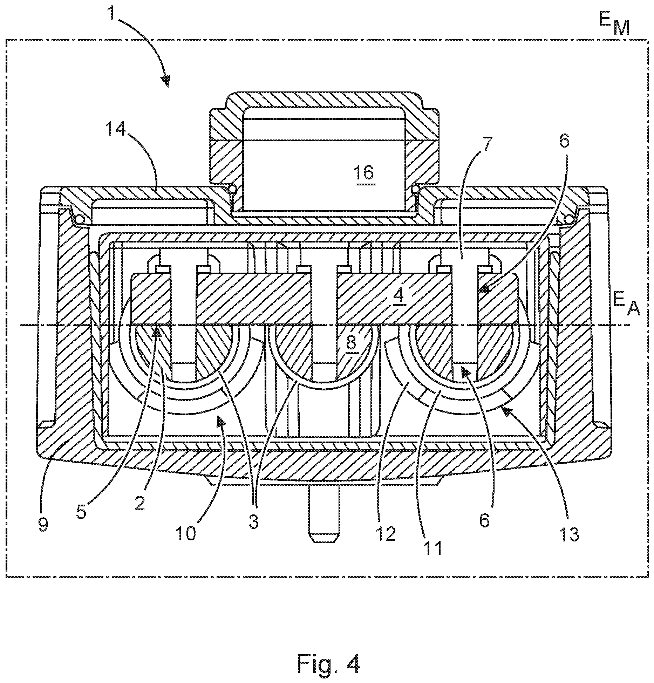

Ein vertikaler Querschnitt eines Hochleistungssteckverbindersystems, bestehend aus dem Kabelanschlussgehäuse 1 und Bauteilen im Innenraum 10 wird in der Figur 4 dargestellt. Besonders deutlich wird hier die Anordnung der Hochleistungskontakte 2 und die Positionierung der Ausnehmungen 5 in der Ebene E_{A}. Da der Schnitt entlang der Mittelebene E_{M} der Schiene 4 verläuft, lassen sich die Verbindungen der Schiene 4 mit den Hochleistungskontakten 2 durch die Sicherungselemente 7 gut erkennen. Die Sicherungselemente 7 sind dabei entlang ihrer Längsachse parallel zur Mittelebene E_{M} der Schiene 4 ausgerichtet, orthogonal zur Ebene E_{A}. Somit kann nach entfernen des Gehäusedeckels 14 ein einfacher Wartungszugriff erfolgen. Sehr gut zu erkennen sind auch die Befestigungselemente 12 der zwei Isolierkörper 3 der äußeren Hochleistungskontakte 2, welche als Teilkreisförmige Anformungen am jeweiligen Isolierkörper 3 ausgeführt sind. Diese Befestigungselemente 12 können nach dem Lösen und Entfernen der Schiene 4 von den Hochleistungskontakten 2 durch verdrehen der Isolierkörper 3 mit übereinstimmenden Ausnehmungen in den Gehäusedurchbrüchen 13 in Flucht gebracht werden. Anschließend, sobald die Befestigungselemente 12 und die Ausnehmungen in den Gehäusedurchbrüchen 13 übereinstimmen, können die Isolierkörper 3 mit den Hochleistungskontakten 2 aus dem Kabelanschlussgehäuse 1 entfernt und/ oder eingesetzt und/ oder ausgetauscht werden.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Hochleistungssteckverbindersystem

### Bezugszeichenliste

- 1: Kabelanschlussgehäuse
- 2: Hochleistungskontakt
- 3: Isolierkörper
- 4: Schiene
- 5: Ausnehmung
- 6: Durchgangsöffnung
- 7: Sicherungselement
- 8: Stirnfläche
- 9: Seitenwand
- 10: Innenraum
- 11: Profilierung
- 12: Befestigungselement
- 13: Gehäusedurchbruch
- 14: Gehäusedeckel
- 15: Hochleistungssteckverbinder
- 16: Verschlusskappe

- L: Längsachse
- E_{A}: Ebene
- E_{M}: Mittelebene

## Patentansprüche

1. Hochleistungssteckverbindersystem aufweisend ein Kabelanschlussgehäuse (1), zum Anschluss von zumindest zwei elektrischen Hochleistungssteckverbindern (15) zur Übertragung und/ oder Verteilung hoher elektrischer Stromstärken und/ oder hohen elektrischen Spannungen, zumindest zwei Isolierkörper (3) zur Aufnahme zumindest je eines Hochleistungskontakts (2) und zumindest einer elektrisch leitfähigen Schiene (4), wobei die Längsachsen (L) der Hochleistungskontakte (2) grundsätzlich in einer Ebene und versetzt voneinander angeordnet sind und wobei die Hochleistungskontakte (2) mittels einer elektrisch leitfähigen Schiene (4) miteinander elektrisch leitend verbunden sind, wobei die zumindest zwei Hochleistungskontakte (2) mit zumindest einer Ausnehmung (5) versehen sind, in welche sich die elektrisch leitende Schiene (4) zumindest teilweise fügt,
**dadurch gekennzeichnet, dass**
die Ausnehmungen (5) der zumindest zwei Hochleistungskontakte (2) in etwa in einer Ebene (E_{A}) liegen, sodass die Schiene (4) auf den Ausnehmungen (5) aufliegend befestigt ist und somit sowohl radiales Verdrehen als auch ein axiales Verschieben in Richtung der Längsachse (L) der Hochleistungskontakte (2) verhindert und wobei die Hochleistungskontakte (2) in den dazugehörigen Isolierkörpern (3) von einer Gehäusewand (9) des Kabelanschlussgehäuses (1) in einen Innenraum (10) des Kabelanschlussgehäuses (1) ragen, wobei die Hochleistungskontakte (2) im Innenraum (10) freistehend positioniert sind und von der Schiene (4) arretiert sind.

2. Hochleistungssteckverbindersystem nach Anspruch 1
**dadurch gekennzeichnet, dass**
die Schiene (4) formschlüssig mit den Hochleistungskontakten (2) verbunden ist.

3. Hochleistungssteckverbindersystem nach Anspruch 1
**dadurch gekennzeichnet, dass**
die Schiene (4) kraftschlüssig mit den Hochleistungskontakten (2) verbunden ist.

4. Hochleistungssteckverbindersystem nach einem der vorstehenden Ansprüche
**dadurch gekennzeichnet, dass**
die Schiene (4) je Hochleistungskontakt (2) zumindest eine Durchgangsöffnung (6) aufweist, durch welche zumindest ein Sicherungselement (7) mit Außengewinde geführt ist, wobei das Sicherungselement (7) mit einem Innengewinde im Hochleistungskontakt (2) verbunden ist.

5. Hochleistungssteckverbindersystem nach einem der vorstehenden Ansprüche
**dadurch gekennzeichnet, dass**
zumindest ein Hochleistungskontakt (2) dem verbleibenden, zumindest einen Hochleistungskontakt (2) gegenüberliegend im Kabelanschlussgehäuse (1) angeordnet ist.

6. Hochleistungssteckverbindersystem nach einem der vorstehenden Ansprüche
**dadurch gekennzeichnet, dass**
die Schiene (4) eine vertikale Mittelebene (E_{M}) aufweist, welche von jedem Hochleistungskontakt (2) zumindest teilweise durchstoßen wird.

7. Hochleistungssteckverbindersystem nach einem der vorstehenden Ansprüche
**dadurch gekennzeichnet, dass**
die Schiene (4) zumindest größtenteils bündig mit den Stirnflächen (8) der zumindest zwei Hochleistungskontakte (2) verbunden ist.

8. Hochleistungssteckverbindersystem nach einem der Ansprüche 4 bis 7,
**dadurch gekennzeichnet, dass**
die Sicherungselemente (7) Parallel zu der Mittelebene (E_{M}) der Schiene (4) ausgerichtet sind.

9. Hochleistungssteckverbindersystem aufweisend ein Kabelanschlussgehäuse (1), zum Anschluss von zumindest zwei elektrischen Hochleistungssteckverbindern (15) zur Übertragung und/ oder Verteilung hoher elektrischer Stromstärken und/ oder hohen elektrischen Spannungen, zumindest zwei Isolierkörper (3) zur Aufnahme zumindest je eines Hochleistungskontakts (2) und zumindest einer elektrisch leitfähigen Schiene (4), wobei die Längsachsen (L) der Hochleistungskontakte (2) grundsätzlich in einer Ebene und versetzt voneinander angeordnet sind und wobei die Hochleistungskontakte (2) mittels einer elektrisch leitfähigen Schiene (4) miteinander elektrisch leitend verbunden sind, wobei die zumindest zwei Hochleistungskontakte (2) mit zumindest einer Ausnehmung (5) versehen sind, in welche sich die elektrisch leitende Schiene (4) zumindest teilweise fügt,
**dadurch gekennzeichnet, dass**
die Isolierkörper (3) die Hochleistungskontakte (2) derart aufnehmen, dass die Hochleistungskontakte (2) und die Schiene (4) sich im miteinander verbundenen Zustand gegenseitig im Innenraum (10) halten, wobei die Schiene nur die Hochleistungskotakte (2) kontaktiert.

## Claims

1. A high-power plug connection system having a cable connection housing (1) for connecting at least two electrical high-power plug connectors (15) for transmitting and/or distributing high electrical currents and/or high electrical voltages, at least two insulating bodies (3) for receiving, respectively, at least one high-power contact (2) and at least one electrically conductive busbar (4), wherein the longitudinal axes (L) of the high-power contacts (2) are arranged fundamentally in a plane and are offset relative to one another, and wherein the high-power contacts (2) are connected electrically conductively to one another by means of an electrically conductive busbar (4), wherein the at least two high-power contacts (2) are provided with at least one recess (5) into which the electrically conductive busbar (4) fits at least partially,
**characterized in that**
the recesses (5) of the at least two high-power contacts (2) lie approximately in a plane (E_{A}) such that the busbar (4) is fastened lying on top of the recesses (5) and thus prevents both radial twisting and axial displacement in the direction of the longitudinal axis (L) of the high-power contacts (2) and wherein the high-power contacts (2) in the corresponding insulating bodies (3) project from a housing wall (9) of the cable connection housing (1) into an interior space (10) of the cable connection housing (1), wherein the high-power contacts (2) are positioned in a free-standing manner in the interior (10) and are locked by the busbar (4).

2. The high-power plug connection system as claimed in claim 1,
**characterized in that**
the busbar (4) is connected in a form-fitting manner to the high-power contacts (2).

3. The high-power plug connection system as claimed in claim 1,
**characterized in that**
the busbar (4) is connected in a force-fitting manner to the high-power contacts (2).

4. The high-power plug connection system as claimed in one of the preceding claims, **characterized in that**
the busbar (4) has, per high-power contact (2), at least one through opening (6), through which at least one securing element (7) with an external thread is passed, wherein the securing element (7) is connected to an internal thread in the high-power contact (2).

5. The high-power plug connection system as claimed in one of the preceding claims, **characterized in that**
at least one high-power contact (2) is arranged opposite to the remaining at least one high-power contact (2) in the cable connection housing (1).

6. The high-power plug connection system as claimed in one of the preceding claims, **characterized in that**
the busbar (4) has a vertical central plane (E_{M}) which is pierced by each high-power contact (2) at least partially.

7. The high-power plug connection system as claimed in one of the preceding claims, **characterized in that**
he busbar is connected at least largely flush with the front faces (8) of the at least two high-power contacts (2).

8. The high-power plug connection system as claimed in one of the preceding claims, **characterized in that**
the securing elements (7) are oriented parallel to the central plane (E_{M}) of the busbar (4).

9. A high-power plug connection system having a cable connection housing (1) for connecting at least two electrical high-power plug connectors (15) for transmitting and/or distributing high electrical currents and/or high electrical voltages, at least two insulating bodies (3) for receiving, respectively, at least one high-power contact (2) and at least one electrically conductive busbar (4), wherein the longitudinal axes (L) of the high-power contacts (2) are arranged fundamentally in a plane and are offset relative to one another, and wherein the high-power contacts (2) are connected electrically conductively to one another by means of an electrically conductive busbar (4), wherein the at least two high-power contacts (2) are provided with at least one recess (5) into which the electrically conductive busbar (4) fits at least partially,
**characterized in that**
the insulating bodies (3) accommodate the high-power contacts (2) in such a way that the high-power contacts (2) and the busbar (4) retain each other in the interior (10) in the connected-together state, wherein the busbar only contacts the high-power contacts (2).

## Revendications

1. Système de connexion à fiche à haute puissance présentant
un boîtier de raccordement de câble (1) destiné au raccordement d'au moins deux connecteurs à fiche à haute puissance (15) pour transmettre et/ou distribuer des intensités de courant électriques élevées et/ou des tensions électriques élevées, au moins deux corps isolants (3) destinés à recevoir au moins respectivement un contact à haute puissance (2) et au moins un rail (4) électriquement conducteur, dans lequel les axes longitudinaux (L) des contacts à haute puissance (2) sont disposés de base dans un plan et de manière décalée les uns des autres et dans lequel les contacts à haute puissance (2) sont connectés électriquement les uns aux autres au moyen d'un rail (4) électriquement conducteur, dans lequel les au moins deux contacts à haute puissance (2) sont pourvus d'au moins un évidement (5), dans lequel le rail (4) électriquement conducteur est inséré au moins en partie,
**caractérisé en ce que**
les évidements (5) des au moins deux contacts à haute puissance (2) se situent à peu près dans un plan (E_{A}),
si bien que le rail (4) est fixé de manière à reposer sur les évidements (5) et empêche ainsi à la fois une rotation radiale et également un coulissement axial en direction de l'axe longitudinal (L) des contacts à haute puissance (2) et dans lequel les contacts à haute puissance (2) dans les corps isolants (3) associés dépassent depuis une paroi de boîtier (9) du boîtier de raccordement de câble (1) dans un espace intérieur (10) du boîtier de raccordement de câble (1),
dans lequel les contacts à puissance élevée (2) sont positionnés de manière autonome dans l'espace intérieur (10) et sont immobilisés par le rail (4).

2. Système de connexion à fiche à haute puissance selon la revendication 1,
**caractérisé en ce que**
le rail (4) est connecté par complémentarité de forme aux contacts à haute puissance (2).

3. Système de connexion à haute puissance selon la revendication 1, **caractérisé en ce que**
le rail (4) est connecté à force aux contacts à haute puissance (2).

4. Système de connexion à haute puissance selon l'une quelconque des revendications précédentes,
**caractérisé en ce que**
le rail (4) présente, par contact à haute puissance (2), au moins une ouverture de passage (6), par laquelle au moins un élément de blocage (7) avec un filetage extérieur est guidé, dans lequel l'élément de blocage (7) est connecté à un filetage intérieur dans le contact à haute puissance (2).

5. Système de connexion à fiche à haute puissance selon l'une quelconque des revendications précédentes,
**caractérisé en ce que**
au moins un contact à haute puissance (2) est disposé dans le boîtier de raccordement de câble (1) de manière à faire face à l'au moins un contact à haute puissance (2) restant.

6. Système de connexion à fiche à haute puissance selon l'une quelconque des revendications précédentes,
**caractérisé en ce que**
le rail (4) présente un plan central vertical (E_{M}), lequel est transpercé au moins en partie par chaque contact à haute puissance (2).

7. Système de connexion à fiche à haute puissance selon l'une quelconque des revendications précédentes,
**caractérisé en ce que**
le rail (4) est connecté au moins en grande partie en affleurement aux surfaces frontales (8) des au moins deux contacts à haute puissance (2).

8. Système de connexion à fiche à haute puissance selon l'une quelconque des revendications 4 à 7,
**caractérisé en ce que**
les éléments de blocage (7) sont orientés de manière parallèle au plan central (E_{M}) du rail (4).

9. Système de connexion à fiche à haute puissance présentant un boîtier de raccordement de câble (1) destiné au raccordement d'au moins deux connecteurs à fiche à haute puissance (15) électriques pour transmettre et/ou distribuer des intensités de courant électriques élevées et/ou des tensions électriques élevées, au moins deux corps isolants (3) destinés à recevoir au moins respectivement un contact à haute puissance (2) et au moins un rail (4) électriquement conducteur, dans lequel les axes longitudinaux (L) des contacts à haute puissance (2) sont disposés de base dans un plan et de manière décalée les uns des autres et dans lequel les contacts à haute puissance (2) sont connectés les uns aux autres de manière électriquement conductrice au moyen d'un rail (4) électriquement conducteur,
dans lequel les au moins deux contacts à haute puissance (2) sont pourvus d'au moins un évidement (5), dans lequel le rail (4) électriquement conducteur est inséré au moins en partie,
**caractérisé en ce que**
les corps isolants (3) reçoivent les contacts à haute puissance (2) de telle manière que les contacts à haute puissance (2) et le rail (4) se maintiennent mutuellement dans l'espace intérieur (10) dans l'état connecté l'un à l'autre, dans lequel le rail ne vient en contact qu'avec les contacts à haute puissance (2).
